# FASCICULE DE BREVET EUROPEEN

(11) **EP 0 504 056 B1**
(45) Date de publication et mention de la délivrance du brevet: **07.06.1995**
(21) Numéro de dépôt: 92400653.9
(22) Date de dépôt: 12.03.1992
(51) Int. Cl.: A23L 1/277, A23L 1/308, A23B 7/06

(54) **Procédé de blanchiment en milieu sec de matières végétales**
Verfahren zum Blanchieren von pflanzlicher Materie in trockenem Milieu
Process for blanching plant materials in dry environment

(30) Priorité: 15.03.1991 FR 9103177
(43) Date de publication de la demande: 16.09.1992
(73) Titulaire: ELF ATOCHEM S.A., 92800 Puteaux (FR)
(72) Inventeur: Devic, Michel, F-69110 Ste Foy les Lyon (FR)
(74) Mandataire: Kaplan, Jean-Pierre

(56) Documents cités:
- EP-A- 0 402 280
- FR-A- 2 382 866
- US-A- 4 241 093
- US-A- 4 246 289
- US-A- 4 649 113
- US-A- 4 844 924

## Description

La présente invention concerne un procédé de fabrication de matières végétales blanchies, plus particulièrement de matières végétales à usage alimentaire, blanchies à l'aide de peroxyde d'hydrogène en solution aqueuse alcaline.

Des matières que l'on peut traiter par le procédé selon l'invention comprennent tous les produits d'origine végétale dont tout ou partie est utilisé pour l'alimentation : ce sont, par exemple, les céréales en grains (blé, maïs, avoine, orge, riz, etc...), des peaux, écorces, pépins de fruits, des sons d'oléagineux, comme le tournesol, des sons de céréales ; on peut aussi traiter des résidus de produits différents comme la betterave sucrière ou non, les fruits tels que les poires, pêches, pommes, abricots, raisins, des oléagineux, comme le tournesol, le soja, les agrumes comme le citron, les céréales, résidus qui résultent de l'extraction de la partie normalement valorisable de ces produits, c'est-à-dire le sucre, le jus de fruit, la pectine, l'huile, l'amidon ; on peut aussi traiter des résidus de fruits et de céréales après fermentation alcoolique (malt de raisin, résidu de distillation alcoolique ...) ou des coquilles d'amandes, de noix contenant ou non le fruit.

En général, ces matières végétales sont traitées par des solutions aqueuses alcalines contenant du peroxyde d'hydrogène pour les "délignifier" et les blanchir.

Ces matières végétales blanchies contiennent une teneur élevée en fibres végétales et sont utiles, notamment, pour fabriquer des produits alimentaires et, en particulier, des produits alimentaires à basse teneur en calories, par exemple des farines diététiques.

Cependant, les produits alimentaires, obtenus à partir de ces fibres, présentent une coloration trop foncée pour permettre leur utilisation comme substituts aux farines.

Généralement, les procédés proposés pour convertir des matières végétales en produits présentant une teneur élevée en fibres végétales cellulosiques qui, en outre, présentent une blancheur appropriée pour une utilisation commerciale, sont des procédés en milieu aqueux. Ainsi, le brevet US-4 649 113 (GOULD) décrit le traitement de diverses fibres végétales par H₂O₂ en milieu alcalin. Les fibres alimentaires sont mises en suspension dans l'eau à raison de 20 à 300 g/l de manière à être complètement mouillées, puis H₂O₂ et NaOH sont ajoutées et l'action de H₂O₂ a lieu en milieu aqueux.

D'autres brevets, tels que le brevet français FR-A-2 647 641 et le brevet européen EP-A-337 653, décrivent, pour améliorer notamment la blancheur, le traitement des matières végétales, avant l'étape de blanchiment, par une solution acide ou basique. Tous ces procédés sont réalisés en milieu aqueux.

Ces procédés de blanchiment présentent des inconvénients dus à la nécessité de travailler en milieu aqueux. Ainsi, les fibres alimentaires dérivées des céréales, comme le son de blé, de maïs, etc..., contiennent toujours une proportion non négligeable de farine ou d'amidon et forment, lorsqu'elles sont mouillées, des "pâtes" de très haute viscosité, très difficiles à agiter et à manipuler. Il est donc nécessaire de diluer très fortement le milieu de blanchiment.

En outre, les fibres alimentaires ayant une très forte capacité de rétention d'eau comme la pulpe de betterave par exemple, augmentent de volume et de poids jusqu'à 10 fois. La productivité de l'appareillage est donc réduite.

Enfin, la diffusion des réactifs à l'intérieur des fibres alimentaires est longue et nécessite soit des agitateurs /malaxeurs très performants et coûteux, soit de longues durées de réaction en milieu très dilué avec les agitations classiques.

Il a été décrit, dans le brevet français FR-A-2 651 965, un procédé de blanchiment de fibre végétale dans lequel la fibre végétale de consistance supérieure ou égale à 10 % (soit un taux d'humidité < 90 %) et préférentiellement compris entre 20 et 35 % (soit un taux d'humidité compris entre 65 et 80 %) est imprégnée avec une solution alcaline de peroxyde d'hydrogène et blanchie pendant le séchage.

Ce procédé permet d'obtenir une fibre sèche blanchie ayant un degré de blancheur supérieur aux procédés classiques la fibre blanchie et séchée contient une quantité variable de peroxyde d'hydrogène résiduel provenant de la réaction incomplète de H2O2 pendant le séchage.

La présente invention a donc pour objet un procédé de blanchiment de matières végétales qui ne présentent pas les inconvénients mentionnés précédemment, et notamment un procédé pouvant être réalisé à sec et permettant l'élimination des peroxydes résiduels, pour obtenir des libres végétales à très haut degré de blancheur et utilisables pour l'alimentation.

Le procédé selon l'invention pour le blanchiment de matière végétale, par action d'une solution alcaline de peroxyde d'hydrogène consiste :
**(a)** à chauffer de la matière végétale présentant un degré d'humidité inférieur ou égal à 50 %, à une température comprise entre 40 et 100°C,
**(b)** à imprégner la matière végétale obtenue à l'étape (a) par une solution alcaline de peroxyde d'hydrogène ayant un pH supérieur ou égal à 8,5 et contenant plus de 100 g/l de peroxyde, à une température comprise entre 20°C et 100°C de façon que toute la solution soit absorbée par la matière végétale, la quantité de peroxyde étant de 1 à 20 % en poids par rapport au poids sec de la matière végétale,
**(c)** à chauffer la matière ainsi imprégnée à une température comprise entre 40°C et 100°C pendant la durée nécessaire pour le blanchiment de la matière,
**(d)** à laver la matière végétale blanchie obtenue à l'étape (c) avec de l'eau et,
**(e)** à sécher.

Les matières végétales, que l'on peut traiter selon l'invention, peuvent être celles mentionnées précédemment, c'est-à-dire notamment des grains entiers de céréales, des sons d'oléagineux, de céréales ou bien des résidus obtenus après extraction de la partie valorisable de matières comme la betterave, les agrumes, les fruits, les oléagineux, les céréales.

Le procédé selon l'invention est caractérisé en ce que la libre est blanchie en milieu sec, c'est-à-dire, sans phase liquide apparente. Le taux d'humidité initial, avant imprégnation par la solution alcaline de peroxyde d'hydrogène, est choisi suffisamment faible pour permettre l'absorption complète et rapide de cette solution alcaline.

Cette limite dépend principalement des capacités d'absorption en eau de la fibre et du volume de la solution alcaline de peroxyde d'hydrogène.

Un taux d'humidité inférieur à 50 % permet de blanchir en milieu sec pratiquement toutes les matières végétales telles que définies précédemment. D'une manière générale, le taux d'humidité initiale doit être aussi faible que possible et, d'une manière préférée, inférieur à 20 %. En particulier, ce taux d'humidité est choisi de 4 à 40 % pour les pulpes végétales provenant par exemple des betteraves à sucre et les pulpes de fruits extraites et de 1 à 5 % pour les matières d'origine céréalière, comme le son de blé, de maïs, de tournesol, d'avoine.

Avant la phase de chauffage (étape a) du procédé selon l'invention, il peut être nécessaire de sécher la matière végétale afin qu'elle présente le degré d'humidité désiré.

Le séchage est obtenu par des moyens de séchage habituels appropriés à la nature de la matière à traiter, comme par exemple les séchoirs à air chaud, à vapeur ou sous vide.La température du séchage peut être comprise entre 40 et 160°C selon la technique utilisée.

Bien que le procédé selon l'invention soit d'autant plus efficace que le taux d'humidité initial de la fibre est faible, celui-ci est souvent, pour des raisons de sécurité dues au risque d'inflammabilité des farines et poussières, maintenu au-dessus d'un minimum compris entre 4 et 11 % selon les fibres.

La plupart des matières d'origine céréalière présentent un taux d'humidité naturel inférieur à 20 % et ne nécessitent donc pas de séchage préalable.

La matière initiale séchée peut être traitée en l'état ou bien après un broyage plus ou moins fin. D'une manière préférée, un broyage grossier permettant d'obtenir des morceaux de 0,5 à 2 mm est effectué pour faciliter l'agitation et l'imprégnation.

Après cette phase éventuelle de séchage, la matière végétale à traiter, ayant le degré d'humidité désiré, est soumise à un chauffage, à une température comprise entre 40°C et 100°C et, de préférence, entre 70°C et 95°C. La durée de ce chauffage est, en général, inférieure à 2 h et, de préférence, comprise entre 10 mn et 60 mn, selon la nature de la matière fibreuse.

La phase de chauffage (a) du procédé selon l'invention permet notamment, d'améliorer l'efficacité du blanchiment.

La phase (b) suivante du procédé consiste en l'imprégnation de la matière à traiter par la solution aqueuse alcaline de peroxyde d'hydrogène. Cette imprégnation doit être totale, c'est-à-dire que toute la solution alcaline doit être absorbée par la matière et qu'il ne doit pas subsister de phase aqueuse au contact de la matière végétale.

La solution aqueuse alcaline de peroxyde d'hydrogène contient plus de 100 g/l de peroxyde et a un pH supérieur ou égal à 8,5.

Le peroxyde d'hydrogène est, en général, utilisé sous forme de solution aqueuse de 30 à 70 %. On préfère utiliser la solution commerciale à 35 % de peroxyde d'hydrogène, de qualité alimentaire.

La quantité de peroxyde d'hydrogène utilisée varie de 1 à 20 % en poids par rapport au poids sec de la matière selon le degré de blancheur désiré et selon la nature de la matière fibreuse. En général, une quantité de 5 à 10 % en poids de peroxyde d'hydrogène permet un blanchiment satisfaisant.

Tous les agents alcalins, seuls ou en mélange, permettant d'amener la solution de peroxyde d'hydrogène à un pH supérieur ou égal à 8,5, peuvent être utilisés. On peut citer, par exemple, la soude, la potasse, le carbonate de sodium ou de potassium, l'oxyde de calcium CaO et la magnésie MgO.

L'agent alcalin est généralement utilisé sous forme de solution aqueuse de 10 à 20 %. L'agent alcalin, utilisé de préférence, est la soude en solution aqueuse à 10 %.

La quantité d'agent alcalin utilisée, exprimée en NaOH par rapport au poids sec de matière végétale à traiter, varie en fonction de la nature de la matière et de la quantité de particulièrement de 1 à 4 %. D'une manière préférée, la quantité maximale est telle que le pH de la matière après blanchiment est inférieur ou égal à 8,5 pour la plupart des matières.

Enfin, la quantité de la solution d'agent alcalin doit être telle que, après mélange avec le peroxyde, la solution alcaline d'H2O2 ait une concentration supérieure ou égale à 100 g de peroxyde par litre.

Il peut être, dans certains cas, avantageux d'ajouter, en quantité inférieure ou égale à 5 % en poids par rapport au poids sec de la matière à traiter, des agents stabilisants du peroxyde d'hydrogène et/ou des agents complexants ou séquestrants des ions métalliques, ces agents étant compatibles avec l'utilisation alimentaire ultérieure du produit, par exemple, du silicate de sodium, des sels solubles de magnésium, de l'acide citrique, du tripolyphosphate de sodium et des acides pyrophosphoriques.

Cependant, dans une mise en oeuvre préférée de l'invention, pour la fabrication des fibres à usages diététiques, il n'est ajouté aucun additif à la solution alcaline du peroxyde d'hydrogène.

Le traitement de blanchiment, selon l'invention, doit être effectué en milieu sec, à l'état solide.

Les quantités et les concentrations des réactifs de la solution alcaline de peroxyde d'hydrogène doivent donc être choisies de façon que toute la solution soit absorbée par la matière végétale au cours de l'imprégnation.

Tous moyens permettant d'assurer une imprégnation rapide et homogène de la matière à traiter sèche, généralement sous forme de poudre, par la solution alcaline de peroxyde peuvent être utilisés, par exemple, des mélangeurs de poudre, des malaxeurs, des vis extrudeuses, des tambours rotatifs.

La solution alcaline de peroxyde est généralement introduite d'une manière continue et répartie uniformément. Une des réalisations préférées, selon l'invention, consiste à pulvériser la solution alcaline de peroxyde en continu sur la poudre de matières végétales placée dans un mélangeur-disperseur.

La température lors de la phase d'imprégnation est comprise entre 20°C et 100°C et, de préférence, entre 60 et 90°C.

Pendant l'imprégnation, il peut être nécessaire de refroidir ou de chauffer la matière végétale pour maintenir la température à la valeur choisie.

La durée d'imprégnation est choisie en fonction des capacités de l'appareil à assurer un mélange homogène et à maintenir la température désirée. En général, une durée de quelques minutes à quelques heures est nécessaire selon le type d'appareil utilisé.

Après la phase d'imprégnation de la matière végétale à traiter par la solution alcaline de peroxyde d'hydrogène, la température de la matière végétale est maintenue entre 40 et 100°C et de préférence, entre 50 et 90°C (phase c).

La durée du chauffage dépend de la nature de la matière et de la quantité de peroxyde ; une durée trop longue peut cependant conduire à une régression de la blancheur. En général la durée varie entre 10 minutes à quelques heures pour la plupart des matières et elle est le plus souvent, de 1 à 2 heures pour une température de 80°C. Pendant le chauffage de la matière imprégnée, le pH du milieu décroît.

Pour le traitement de la plupart des matières végétales, il est avantageux de choisir une quantité d'agent alcalin, une durée de chauffage et une température telles qu'à la fin du blanchiment, le pH du milieu soit voisin de la neutralité et au plus égal à 8,5. On élimine ainsi la nécessité d'un traitement ultérieur de neutralisation par un acide.

Après le blanchiment, on lave une ou plusieurs fois la matière fibreuse avec de l'eau, en quantité suffisante pour éliminer les matières minérales et le peroxyde résiduel jusqu'au degré souhaité.

Le lavage peut être réalisé avec de l'eau, éventuellement déminéralisée, à une température de 20 à 100°C. Le lavage peut se faire par dilution avec de l'eau, puis séparation de la phase liquide au moyen d'un filtre ou d'une presse, ou bien par passage direct de l'eau à travers la matière fibreuse disposée sur un filtre ou dans une presse.

La matière végétale, à l'issue du lavage, est séchée jusqu'au degré d'humidité requis pour son utilisation ou sa transformation en farine.

Le séchage est effectué selon les techniques habituelles appropriées à chaque matière végétale.

La température et la durée du séchage sont choisies de façon à éviter le jaunissement de la fibre pendant l'opération de séchage.

Il est possible d'ajouter aux étapes du procédé selon l'invention, une étape de traitement de la matière végétale blanchie par une enzyme, comme la catalase, capable de décomposer le peroxyde.

Cette étape peut être réalisée après l'étape de lavage ou bien au cours de cette étape.

Ce traitement par l'enzyme a lieu par imprégnation de la matière blanchie, à une température de 20°C à 50°C, par une solution aqueuse de la catalase pendant une durée comprise entre quelques minutes et plusieurs heures, selon la nature de la fibre et la température.

D'une manière préférée, la durée du traitement varie de 10 mn à 2 heures à une température de 25 à 45°C. Le traitement peut se faire en milieu aqueux à une consistance de 2 à 40 %.

La catalase utilisée peut être d'origine animale comme celle extraite du foie de boeuf ou bien provenir de culture de moisissures comme l'Aspergillus Niger.

La quantité utilisée est calculée en fonction de la quantité de peroxyde résiduel et de l'activité de la catalase utilisée.

On peut ajouter une étape de lavage après le traitement par la catalase.

Le procédé selon l'invention présente plusieurs avantages. Notamment, le traitement des matières végétales à sec permet d'obtenir un plus haut degré de blancheur pour une même quantité de peroxyde d'hydrogène. On a aussi observé que le procédé réduit la dégradation des constituants de la matière végétale, dû au fait que le blanchiment a lieu à la surface des fibres, les matières à traiter n'étant pas mouillées par la phase aqueuse.

Le procédé selon l'invention permet, en outre, une économie d'énergie de chauffage puisqu'il a lieu en milieu sec ; de plus, l'appareil utilisé pour le blanchiment peut être plus simple (traitement de matières sèches) et a une meilleure productivité.

Les exemples suivants illustrent l'invention.

Dans tous les exemples, les quantités de réactifs sont exprimées en pourcentage en poids par rapport à la matière végétale sèche à traiter.

Le degré de blancheur de la matière végétale, avant ou après blanchiment, est mesuré à l'aide d'un réflectomètre à 457 nm, selon la norme ISO de l'industrie papetière et il est exprimé en degré ISO.

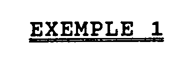

176,2 g de pulpe de betterave fraîche obtenue après extraction du sucre, ayant une teneur en eau de 77,3 % sont séchés à l'étuve à 80°C jusqu'à l'obtention d'une teneur en humidité de 20 %, soit un poids de 50 g (40 g sec).

La pulpe en poudre à 20 % d'humidité est alors placée dans un réacteur mélangeur de 1 l et est chauffée à 70°C pendant 30 mn. On pulvérise alors 19,45 g d'une solution alcaline d'H₂O₂ constituée de 11,45 g de solution de H₂O₂ à 35 % (soit une quantité de 10 % d'H₂O₂ en poids) et 8 g de soude à 10 % (soit une quantité de 2 % de NaOH). Cette solution a un pH de 9,9 et contient 200 g d'H2O2/l. La durée de l'imprégnation est de 4 mn et la température est maintenue à 70°C.

On agite la poudre pendant 1 h à 70°C, le pH de la fibre blanchie est alors de 5,8. La poudre est alors mise en suspension dans 600 cm3 d'eau à 50°C et on ajoute 50 mg de catalase à 274000 U/ml. Après 15 mn à 50°C, on filtre et on sèche à 70°C à l'étuve.

On obtient 33,8 g de pulpe blanchie sèche ayant une blancheur de 40,1°ISO, un pH de 5,9 et une teneur en H₂O₂ résiduel inférieure à 10 ppm.

La blancheur de la pulpe non traitée est de 31,5°ISO.

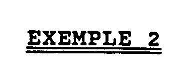

On procède exactement comme à l'exemple 1, à l'exception du séchage initial de la pulpe de betterave qui est effectué jusqu'à une teneur en humidité de 40 %, soit un poids de 66,5 g (40 g sec).

On obtient 32 g de pulpe blanchie sèche ayant une blancheur de 39,6°ISO, un pH de 5,7 et une teneur en H₂O₂ résiduel inférieure à 10 ppm.

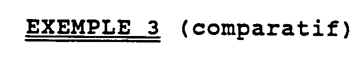

On procède exactement comme à l'exemple 1, à l'exception du séchage initial de la pulpe de betterave qui est effectué jusqu'à une teneur en humidité de 60 %, soit un poids de 100 g (40 g sec).

On obtient 34 g de pulpe blanchie sèche ayant une blancheur de 37,2°ISO et un pH de 5,8.

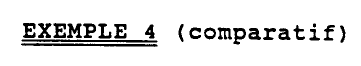

On procède exactement comme à l'exemple 1, mais sans effectuer de séchage initial de la pulpe de betterave qui est utilisée à une teneur en humidité de 77,3 %.

La blancheur obtenue est de 36,5°ISO et le pH de 5,9.

Les exemples 3 et 4 montrent que, si le blanchiment n'est pas effectué dans les conditions du procédé selon l'invention, notamment en ce qui concerne le taux d'humidité, le degré de blancheur obtenu est plus faible que celui obtenu avec les mêmes quantités de réactif, mais avec une teneur en humidité de la pulpe avant imprégnation, inférieur à 50 %, conformément à l'invention.

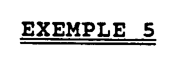

Dans un réacteur mélangeur de 100 l en acier inoxydable, on charge 10,42 kg de pulpe de betterave séchée (après extraction du sucre) à 4,2 % d'humidité et broyée grossièrement (0,5 à 1 mm), soit un poids sec de 10 kg.

La poudre est chauffée avec agitation à 70°C pendant 15 mn. On pulvérise alors sur la poudre agitée 4,86 kg d'une solution alcaline d'H₂O₂ composée de 2,86 kg d'H₂O₂ à 35 % et de 2 kg de NaOH à 10 %. Cette solution a un pH de 9,9 et contient 200 g/l d'H₂O₂.

La durée de l'imprégnation est de 20 mn et la température de la poudre est de 88°C pendant l'imprégnation.

La poudre est alors chauffée à 70°C pendant 1 heure. Le pH de la fibre est alors de 5,9. La poudre est mise en suspension dans 80 l d'eau, filtrée et lavée avec 100 l d'eau froide.

La pulpe lavée est alors séchée à 60°C pendant 12 heures jusqu'à un taux d'humidité de 5 %. On obtient 9,49 kg de pulpe de betterave blanchie ayant un pH de 6,3 et une blancheur de 38,5°ISO. La blancheur de la pulpe avant traitement est de 30,5°ISO.

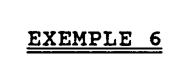

Dans un réacteur mélangeur de 100 l en acier inoxydable, on charge 20 kg de son de maïs broyé ayant une humidité de 8 % (18,4 kg sec).

On chauffe la poudre à 70°C pendant 15 mn, puis on pulvérise 8,93 kg d'une solution alcaline d'H₂O₂ composée de 6,165 kg d'H₂O₂ à 30 % et 2,77 kg de NaOH à 10 %, soit une solution contenant 200 g H₂O₂/l et d'un pH de 9,5.

La durée de l'imprégnation est de 1 heure et la température de la poudre pendant l'imprégnation est de 90°C. On maintient l'agitation pendant 15 mn à 90°C. Le son de maïs blanchi est alors lavé avec 180 l d'eau à 20°C et séché sous vide à 90°C pendant 3 heures.

On obtient 17 kg de son blanchi à 7,1 % d'humidité ayant un pH de 8, une teneur en H₂O₂ résiduelle inférieure à 20 ppm et une blancheur de 43°ISO. La blancheur du son non traité est de 32,8°ISO.

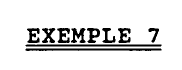

Dans un réacteur mélangeur de 100 l en acier inoxydable, on charge 17,306 kg de malt d'orge séché et broyé, ayant une humidité de 8,1 % (poids sec de 15,9 kg).

On chauffe la poudre à 95°C pendant 30 mn et on pulvérise une solution alcaline de H₂O₂ constituée de 4,54 kg d'H₂O₂ à 35 % et de 2,385 kg de NaOH à 10 %, soit une solution contenant 230 g H₂O₂/l et ayant un pH de 9,5.

L'imprégnation est réalisée à 90°C et dure 30 mn. Après imprégnation, on maintient le chauffage à 90°C pendant 1 heure ; le pH de la poudre est alors de 5,5.

Le malt d'orge blanchi est alors lavé avec de l'eau froide jusqu'à disparition du peroxyde dans les eaux de lavage (la teneur en H₂O₂ est inférieure à 2 ppm).

Le malt d'orge lavé est alors séché à 70°C. On obtient 10,753 kg de malt d'orge blanchi ayant une humidité de 8 %, un pH de 7,1 et une teneur en H₂O₂ résiduelle inférieure à 10 ppm. La blancheur de la fibre blanchie est de 31°ISO. La fibre non traitée a une blancheur de 21,3°ISO.

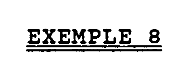

103 g de son de tournesol broyé ayant une teneur en humidité de 10 % (poids sec 92,7 g) sont chauffés à 90°C pendant 10 mn dans une réacteur mélangeur de 1 l.

On pulvérise alors 37 g d'une solution alcaline d'H₂O₂ composée de :
18,5 g d'H₂O₂ à 35 % (soit une quantité d'H₂O₂ de 7 %) et de 18,5 g de NaOH à 10 % (soit une quantité de NaOH de 2 %).

La durée de l'imprégnation est de 7 mn et la température est de 90°C pendant l'imprégnation. On agite la poudre pendant 30 mn à 90°C. Le pH de la fibre blanchie est alors de 5,5.

La poudre de son est alors mise en suspension dans 500 cm³ d'eau froide et est filtrée puis lavée avec 1 l d'eau. Le son de tournesol est séché à l'étuve à 80°C jusqu'à poids constant.

On obtient 84 g de son de tournesol blanchi ayant un pH de 6,9 et une blancheur de 54°ISO.

Le son initial, avant traitement, a une blancheur de 32,2°ISO.

## Revendications

1. Procédé de blanchiment de matière végétale par action d'une solution aqueuse alcaline de peroxyde d'hydrogène, caractérisé en ce qu'il consiste :
**(a)** à chauffer de la matière végétale présentant un degré d'humidité inférieur ou égal à 50 %, à une température comprise entre 40 et 100°C,
**(b)** à imprégner la matière végétale obtenue à l'étape (a) par une solution alcaline de peroxyde d'hydrogène ayant un pH supérieur ou égal à 8,5 et contenant plus de 100 g/l de peroxyde, à une température comprise entre 20°C et 100°C de façon que toute la solution soit absorbée par la matière végétale, la quantité de peroxyde étant de 1 à 20 % en poids par rapport au poids sec de la matière végétale,
**(c)** à chauffer la matière ainsi imprégnée à une température comprise entre 40°C et 100°C pendant la durée nécessaire pour le blanchiment de la matière,
**(d)** à laver la matière végétale blanchie obtenue à l'étape (c) avec de l'eau et,
**(e)** à sécher.

2. Procédé conforme à la revendication 1, caractérisé en ce que la matière végétale à traiter a un degré d'humidité inférieur à 20 %.

3. Procédé conforme à la revendication 1, caractérisé en ce que le degré d'humidité est de 4 à 40 % pour des pulpes de betterave à sucre et de fruits.

4. Procédé conforme à la revendication 1, caractérisé en ce que le degré d'humidité est de 1 à 5 % pour la matière végétale d'origine céréalière.

5. Procédé conforme à l'une des revendications 1 à 4, caractérisé en ce que le degré d'humidité souhaité pour la matière végétale est obtenu par un séchage préalable à une température comprise entre 40 et 160°C.

6. Procédé conforme à l'une des revendications 1 à 5, caractérisé en ce que lors de l'étape (a), la matière végétale est chauffée pendant moins de 2 h et, de préférence entre 10 à 60 mn.

7. Procédé conforme à la revendication 1, caractérisé en ce que l'agent alcalin est la soude utilisée en quantité de 0,5 à 10 % en poids par rapport à la matière végétale sèche à traiter.

8. Procédé conforme à la revendication 1, caractérisé en ce que la solution alcaline de peroxyde d'hydrogène utilisée à l'étape (b) contient, en outre, un agent stabilisant du peroxyde d'hydrogène et/ou un agent complexant ou séquestrant les ions métalliques.

9. Procédé conforme à l'une des revendications 1 à 9, caractérisé en ce que la durée du chauffage de l'étape (c) varie entre 10 mn et quelques heures, de préférence entre 1 et 2 heures à 80°C.

10. Procédé conforme à l'une des revendications 1 à 10, caractérisé en ce que, à l'étape (d), on lave la matière blanchie avec de l'eau éventuellement déminéralisée, à une température comprise entre 20 et 100°C.

11. Procédé conforme à l'une des revendications 1 à 11, caractérisé en ce que, après ou pendant l'étape de lavage (d), on traite la matière végétale blanchie par une solution aqueuse contenant de la catalase, à une température comprise entre 20°C et 50°C pendant une durée variant entre 10 mn et 2 heures.

## Claims

1. Process for bleaching plant material by the action of an aqueous alkaline hydrogen peroxide solution, characterised in that it comprises:
(a) heating plant material which has a moisture level of less than or equivalent to 50% at a temperature of between 40 and 100°C,
(b) soaking the plant material obtained in step (a) with an alkaline hydrogen peroxide solution whose pH is greater than or equivalent to 8.5 and which contains more than 100 g/l of peroxide, at a temperature of between 20°C and 100°C in such a way that all of the solution is absorbed by the plant material, the count of peroxide being from 1 to 20% by weight relative to the dry weight of the plant material,
(c) heating the material which has thus been soaked at a temperature of between 40°C and 100°C during the period required for bleaching the material,
(d) washing the bleached vegetable material obtained in step (c) with water and
(e) drying it.

2. Process according to Claim 1, characterised in that the plant material to be treated has a moisture level of less than 20%.

3. Process according to Claim 1, characterised in that the moisture level is between 4 and 40% in the case of sugar-beet pulps and fruit pulps.

4. Process according to Claim 1, characterised in that the moisture level is between 1 and 5% in the case of cereal-derived plant material.

5. Process according to one of Claims 1 to 4, characterised in that the desired moisture level of the plant material is obtained by first drying the material at temperature of between 40 and 160°C.

6. Process according to one of claims 1 to 5, characterised in that, in step (a), the plant material is heated far less than 2 hours, preferably between 10 and 60 minutes.

7. Process according to Claim 1, characterised in that the alkaline agent is sodium hydroxide used in amounts of from 0.5 to 10% by weight relative to the dry plant material to be treated.

8. Process according to Claim 1, characterised in that the alkaline hydrogen peroxide solution used in step (b) furthermore contains a hydrogen peroxide stabiliser and/or a complexing or sequestering agent for metal ions.

9. Process according to one of Claims 1 to 9, characterised in that the heating time in stop (c) varies between 10 minutes and a few hours, preferably between 1 and 2 hours at 80°C.

10. Process according to one of Claims 1 to 10, characterised in that, in stop (d), the bleached material is washed with optionally demineralised water at a temperature of between 20 and 100°C.

11. Process according to one of Claims 1 to 11, characterised in that after or during then washing step (d) the bleached plant material is treated with an aqueous solution containing catalase, at a temperature of between 20°C and 50°C, for a period varying between 10 minutes and 2 hours.

## Patentansprüche

1. Verfahren zum Bleichen pflanzlicher Materialien durch Einwirkung einer alkalischen wässerigen Wasserstoffperoxidlösung, gekennzeichnet durch folgende Schritte:
(a) Erwärmen des pflanzlichen Materials, das einen Feuchtigkeitsgrad kleiner als oder gleich 50 % aufweist, auf eine Temperatur von 40 bis 100 °C,
(b) Imprägnieren des in Schritt (a) erhaltenen pflanzlichen Materials mit einer alkalischen Wasserstoffperoxidlösung, die einen pH-Wert größer als oder gleich 8,5 aufweist und deren Peroxidgehalt größer als 100 g/l ist, bei einer Temperatur von 20 bis 100 °C in einer Weise, daß die gesamte Lösung von dem pflanzlichen Material absorbiert wird, wobei der Peroxidgehalt 1 bis 2) Gew.-%, bezogen auf das Trockengewicht des pflanzlichen Materials, beträgt,
(c) Erwärmen des so imprägnierten Materials auf eine Temperatur von 40 bis 100 °C während der zum Bleichen des Materials benötigten Dauer,
(d) Waschen des in Schritt (c) erhaltenen gebleichten pflanzlichen Materials mit Wasser und.
(e) Trocknen des gebleichten pflanzlichen Materials.

2. Verfahren nach Anspruch 1, dadurch gekennzeichnet, daß das zu behandelnde pflanzliche Material einen Feuchtigkeitsgrad kleiner als 20 % aufweist.

3. Verfahren nach Anspruch 1, dadurch gekennzeichnet, daß der Feuchtigkeitsgrad von Zuckerrübenschnitzeln und von Fruchtfleisch 4 bis 40 % beträgt.

4. Verfahren nach Anspruch 1, dadurch gekennzeichnet, daß der Feuchtigkeitsgrad der von Getreide abstammenden pflanzlichen Materialien 1 bis 5 % beträgt

5. Verfahren nach einem der Ansprüche 1 bis 4, dadurch gekennzeichnet, daß der gewünschte Feuchtigkeitsgrad des pflanzlichen Materials durch eine vorhergehende Trocknung bei einer Temperatur von 40 bis 160 °C erreicht wird.

6. Verfahren nach einem der Ansprüche 1 bis 5, dadurch gekennzeichnet, daß das pflanzliche Material in Schritt (a) weniger als 2 h, vorzugsweise 10 bis 60 min, erwärmt wird.

7. Verfahren nach Anspruch 1, dadurch gekennzeichnet,daß das alkalische Mittel Natriumhydroxid ist, das in einer Menge von 0,5 bis 10 Gew.-%, bezogen auf das zu behandelnde trockene pflanzliche Material, verwendet wird.

8. Verfahren nach Anspruch 1, dadurch gekennzeichnet, daß die in Schritt (b) verwendete alkalische Wasserstoffperoxidlösung außerdem ein Stabilisierungsmittel für Wasserstoffperoxid und/oder ein Mittel zur Komplexierung oder Maskierung von Metallionen enthält.

9. Verfahren nach einem der Ansprüche 1 bis 8, dadurch gekennzeichnet, daß die Dauer, während der in Schritt (c) erwärmt wird, für eine Temperatur von 80 °C 10 min bis einige Stunden, vorzugsweise 1 bis 2 h, beträgt.

10. Verfahren nach einem der Ansprüche 1 bis 9, dadurch gekennzeichnet, daß das gebleichte Material in Schritt (d) mit gegebenenfalls demineralisiertem Wasser bei einer Temperatur von 20 bis 100 °C gewaschen wird.

11. Verfahren nach einem der Ansprüche 1 bis 10, dadurch gekennzeichnet, daß nach oder während des Waschschritts (d) das gebleichte pflanzliche Material bei einer Temperatur von 20 bis 50 °C während einer Dauer von 10 min bis 2 h mit einer wässerigen Lösung, die Katalase enthält, behandelt wird.
